# EUROPÄISCHE PATENTSCHRIFT

(11) **EP 3 738 468 B1**
(45) Veröffentlichungstag und Bekanntmachung des Hinweises auf die Patenterteilung: **10.05.2023**
(21) Anmeldenummer: 20173115.5
(22) Anmeldetag: 06.05.2020
(51) Int. Cl.: A47B 83/00, E04B 2/74, E06B 3/48, A47F 7/30, A47F 7/00

(54) **ANORDNUNG MIT MINDESTENS EINEM WANDELEMENT UND EINER VORRICHTUNG ZUR
AUFBEWAHRUNG UND NUTZUNG DES MINDESTENS EINEN WANDELEMENTS**
ARRANGEMENT COMPRISING AT LEAST ONE WALL ELEMENT AND A DEVICE FOR STORING AND USING THE AT LEAST ONE WALL ELEMENT
AGENCEMENT COMPRENANT AU MOINS UN ÉLÉMENT DE PAROI ET UN DISPOSITIF DE STOCKAGE
ET D' UTILISATION DE L'AU MOINS UN ÉLÉMENT DE PAROI

(30) Priorität: 17.05.2019 DE 102019113088; 17.05.2019 DE 202019105037 U
(43) Veröffentlichungstag der Anmeldung: 18.11.2020
(73) Patentinhaber: Operations Support GmbH, 4132 Muttenz (CH)
(72) Erfinder: HAFNER, Oliver, 4132 Muttenz (CH)
(74) Vertreter: Reichert & Lindner Partnerschaft Patentanwälte

(56) Entgegenhaltungen:
- US-A1- 2018 289 154

## Beschreibung

Die Erfindung betrifft eine Anordnung umfassend mindestens ein Wandelement und eine Vorrichtung zur Aufbewahrung und Nutzung des mindestens einen Wandelements.

Die deutsche Offenlegungsschrift DE 42 43 301 A1 offenbart einen rollengestützten Container zum Lagern und Transportieren von Messestand-Bauteilen in veränderbaren, unterschiedlichen Abteilen. Die einzelnen Abteile sind neben, vor und/oder übereinander angeordnet und einzeln von Öffnungen an einer Schmal- und einer Breitseite des Containers aus frei zugänglich. Eine Sicherung der Messebauteile in dem Container ist nicht vorgesehen.

Die US Patentanmeldung US 2018/0289154 A1 offenbart eine mobile Konferenzarbeitsstation, wobei die mobile Konferenzarbeitsstation ein zentrales Gehäuse und einen ersten und einen zweiten Flügel umfasst. Der erste und der zweite Flügel sind so konfiguriert, dass sie sich zwischen einer eingefahrenen Position und einer ausgefahrenen Position bewegen. Beide Flügel umfassen eine Basisplatte, die verschiebbar mit dem zentralen Gehäuse verbunden ist, und eine erste Platte, die mit der Basisplatte gekoppelt und konfiguriert ist, um sich relativ zu dieser zu bewegen. In der eingefahrenen Position sind der erste und der zweite Flügel so konfiguriert, dass sie in den Flügelspeicherhohlräumen aufgenommen werden und relativ zueinander versetzt sind. In der ausgefahrenen Position sind der erste und der zweite Flügel so konfiguriert, dass sie sich nach außen über die erste beziehungsweise zweite gegenüberliegende Seite des zentralen Gehäuses hinaus erstrecken.

In der deutschen Offenlegungsschrift DE 10 2006 020 685 A1 ist ein System zur Schaffung eines flexiblen Arbeitsraums offenbart. Das System umfasst mindestens zwei hinsichtlich ihrer Oberfläche und/oder ihres Materials unterschiedliche Auflageelemente für Tischplatten, die in mindestens einer Grundfläche gleich sind. Ferner umfasst das System mindestens eine Aufbewahrungseinrichtung, insbesondere einen Schrank, ein Regal und/oder einen Rollwagen, mit mindestens einer zu der Grundfläche komplementären Haltevorrichtung.

Die deutsche Offenlegungsschrift DE 10 2014 011 028 A1 betrifft eine mobile Präsentationswand, die aus wenigstens einem Wandelement besteht. Die Präsentationswand ist mit wenigstens zwei unterseitig angeordneten Bewegungseinrichtungen versehen. Das Wandelement weist in Breitenrichtung eine Krümmung auf und kann in einem oder beiden Seitenbereichen mit wenigstens einem zweiten Wandelement formschlüssig und/oder kraftschlüssig verbunden werden.

Das japanische Patent JP H1 1-128034 A offenbart eine Präsentationseinrichtung. Die Ausstellungselemente sind an der linken und rechten Seite eines Hauptkörpers der Präsentationseinrichtung mit Gelenken drehbar verbunden. Der Hauptkörper ist an seiner oberen Vorderfläche mit einer Schreibtafel versehen, und auch ein Rollbildschirm kann durch einen Schlitz herausgezogen werden. Eine Unterbringung mehrerer Tafeln im Hauptkörper ist nicht vorgesehen.

Das deutsche Gebrauchsmuster DE 20 2018 103 900 U1 offenbart ein kombinierbares mobiles Wandelement, das eine Wandfüllung und die Wandfüllung umschließende Rahmenelemente umfasst. Mittels Haltenuten in den Rahmenelementen können die einzelnen Wandelemente miteinander verbunden werden.

Das eidgenössische Patent CH 647 684 A5 offenbart ein Wandteil mit einem daran verankerten Fußteil, das als Wagen ausgebildet ist. Das Fußteil ist in das Fußteil eines weiteren Wandteils einschiebbar. Zusammen können die Wandteile damit in andere Räume verbracht werden. Eine Aufbewahrung der Wandteile ohne die Gefahr der Beschädigung oder des Vandalismus ist nicht vorgesehen.

Die deutsche Patentanmeldung DE 10 2004 040 604 A1 betrifft einen transportablen mobilen Ausstellungsstand, den man auf Messen und sonstigen Ausstellungen zum Einsatz bringen kann. Die Ausstellungsstandeinrichtung besteht aus mindestens einer außen als Transportbehälter und innen als Ausstellungsmöbel hergerichteten Kiste mit einem an der einen Längsseite mittels eines Gelenkes angebrachten Deckel. Der Inhalt dieser Kiste, das Inventar, braucht dabei nicht für den Gebrauch auf einer Ausstellung verändert zu werden, alles, vom Schreibgerät bis zum Prospektmaterial, bleibt an Ort und Stelle liegen.

Das deutsche Gebrauchsmuster DE 20 2012 101 930 U1 offenbart ein Messebausystem mit einer Mehrzahl von nach dem Baukastenprinzip miteinander zu einer Wandeinrichtung kombinierbaren Wandelementen. Ein Wandelement ist vormontiert und weist eine mit Anschlusselementen bestückte Platte auf. Ferner ist eine Lager- und Transporteinrichtung zur Aufnahme der Wandelemente in Nicht-Gebrauchsstellung vorgesehen. Klemmverbinder dienen zum Verbinden von Wandelementen in Gebrauchsstellung.

Bisher werden oft Flip-Chart Blätter verwendet, die nach der Besprechung aus dem Projektraum entfernt und zur nächsten Besprechung wieder mitgebracht werden. Dies ist sehr umständlich, da die Blätter zerknittern, nichts ausgebessert werden können und zusätzliche Unterlagen (Bilder und Zeichnungen) nicht angeheftet werden können.

Aufgabe der Erfindung ist es daher, eine Anordnung umfassend mindestens ein Wandelement und eine Vorrichtung zur Aufbewahrung und Nutzung des mindestens einen Wandelements bereitzustellen, in der das mindestens eine Wandelement, insbesondere die als Informationsträger ausgebildeten Wandelemente, sicher vor unbefugtem Zugang aufbewahrt werden können.

Diese Aufgabe wird durch eine Anordnung umfassend mindestens ein Wandelement und eine Vorrichtung zur Aufbewahrung und Nutzung des mindestens einen Wandelements gelöst, welche Anordnung die Merkmale des Anspruchs 1 umfasst.

Die Erfindung ist im beigefügten Anspruchssatz 1 bis 13 beschrieben.

Gemäß einer Ausführungsform der Erfindung können in einer Aufnahme mehrere Wandelemente bevorratet werden.

Der Vorteil der Erfindung ist, dass damit Besprechungs- und Projekträume nach Bedarf abgegrenzt werden können. Die Wandelemente können zugleich auch beschreibbar oder als Träger von Inhalten ausgebildet sein, die sich beispielsweise aus Besprechungen, Projektarbeiten, etc. ergeben. Diese Inhalte beziehungsweise Informationen können mit der Erfindung sicher und unzugänglich aufbewahrt werden, so dass die erarbeiteten Unterlagen nicht allgemein zugänglich sind.

Bei geöffnetem Schließmechanismus können die ausziehbaren Wandelemente entgegengesetzt und parallel zu den Seitenwänden der Ausnahme in Längsrichtung ausgezogen werden. Im ausgezogenen Zustand können die ausziehbaren Wandelemente an der Aufnahme festgelegt werden. Ebenso können die schwenkbaren Wandelemente um eine vertikale Drehachse an der Aufnahme geschwenkt werden.

Erfindungsgemäß kann der Schließmechanismus verschiedenartig ausgestaltet sein. Der Schließmechanismus kann beispielsweise eine Stange sein, die seitlich durch ein Loch in der Seitenwand der Aufnahme der Vorrichtung und in fluchtenden Löchern der Wandelemente gesteckt ist, wenn sich die Wandelemente in der Aufnahme befinden. Die Stange besitzt einen Verriegelungsmechanismus, so dass die Wandelemente nicht von einem Unbefugten aus der Aufnahme entnommen oder geschwenkt werden können.

Gemäß einer anderen Ausgestaltung der Erfindung kann die Stange durch Halterungen an der Aufnahme sowie durch Halterungen an den beweglichen Wandelementen geführt werden. Die Stange wird beispielsweise mit einem Schloss gegen eine Entnahme oder Bewegung gesichert.

Eine weitere Möglichkeit zur Sicherung der Wandelemente ist, dass die Wandelemente einzeln oder mit einem zentralen Schloss mittels schieb- oder drehbaren Stiften oder Haken, welche in eine Öffnung oder Öse greifen, gesichert werden.

Eine weitere Möglichkeit der Sicherung der Wandelemente in der Aufnahme ist, dass seitlich an der Aufnahme ein schwenkbarer Riegel oder eine schwenkbare Tür angebracht ist. Durch den schwenkbaren Riegel oder die schwenkbare Tür kann die hintere und vordere Öffnung der Aufnahme verschlossen werden. Der schwenkbare Riegel oder die schwenkbare Tür können einen Handgriff umfassen, mit dem die Vorrichtung bewegt (gezogen oder geschoben) werden kann.

Die oben beschriebenen Möglichkeiten zum Abschließen der Aufnahme mit den darin angeordneten Wandelementen soll nicht als Beschränkung der Erfindung aufgefasst werden. Es ist für einen Fachmann selbstverständlich, dass es unzählige Ausführungen gibt, mit denen eine Verriegelung der Aufnahme mit den darin angeordneten Wandelementen ausgeführt werden kann.

Die Wandelemente, die in der Aufnahme untergebracht sind, sind in Form der ausziehbaren Wandelemente und/oder als die herausnehmbaren Wandelemente und/oder als die schwenkbaren Wandelemente ausgebildet. Die ausziehbaren Wandelemente sind derart ausgebildet, dass sie im ausgezogenen Zustand noch in der Aufnahme gehaltert sind. Für das Ausziehen der ausziehbaren Wandelemente ist jedes ausziehbare Wandelement an mindestens einem oberen Ende und/oder einem unteren Ende über mindestens einen in einer Längsrichtung der Aufnahme verlaufenden Auszug gehaltert. Der mindestens eine in Längsrichtung verlaufende Auszug ist als eine Gleitführung oder eine wälzgelagerte oder kugelgelagerte Führung definiert.

Die herausnehmbaren Wandelemente können gemäß einer Ausführungsform an einem oberen Ende hängend an einer in Längsrichtung der Aufnahme verlaufenden Linearführung geführt sein. Die hängend geführten und herausnehmbaren Wandelemente können an einem unteren Ende der Wandelemente in einer seitlichen Führung geführt sein.

Die schwenkbaren Wandelemente können an den Stirnseiten der Aufnahme mittels Scharnieren angelenkt sein. Im Zustand der Lagerung beziehungsweise Aufbewahrung der schwenkbaren Wandelemente liegen diese an einer der Seitenwände der Aufnahme an und können vor unberechtigtem Gebrauch mit dem Schließmechanismus verriegelt werden. Bei geöffnetem Schließmechanismus können die schwenkbaren Wandelemente um eine vertikale Achse geschwenkt und in eine Gebrauchsstellung gebracht werden.

Gemäß einer anderen Ausführungsform können die herausnehmbaren Wandelemente an einem unteren Ende stehend in einer seitlichen Führung in Längsrichtung der Aufnahme und an einem oberen Ende frei in einer seitlichen Führung an der Decke der Aufnahme geführt sein.

Gemäß einer Ausführungsform der Erfindung kann die seitliche Führung für das untere Ende des herausnehmbaren Wandelementes direkt auf dem Boden der Aufnahme vorgesehen sein. Eine andere Möglichkeit ist, dass die seitliche Führung auf einer Plattform über dem Boden der Aufnahme vorgesehen sein kann. Eine weitere Möglichkeit ist, dass die seitliche Führung auf einem auf dem Boden der Aufnahme stehenden Podest vorgesehen sein kann.

Bei geöffnetem Schließmechanismus können die herausnehmbaren Wandelemente parallel zu den Seitenwänden der Aufnahme aus der Aufnahme entnommen werden. Gemäß einer Ausführungsform kann jeweils ein Wandelement in jeweils einem aus der Aufnahme entnehmbaren Podest gehaltert werden. Dabei kann die Anzahl der am Boden der Aufnahme positionierten und herausnehmbaren Podeste der Anzahl der in der Aufnahme vorgesehenen, herausnehmbaren Wandelemente entsprechen.

In einer Ausführungsform besitzt jedes der Podeste eine Aufstellfläche. Über der Aufstellfläche trägt das Podest eine seitliche Führung, die mindestens zwei voneinander beabstandete Führungselemente umfasst, deren Abstand größer ist als ein Dicke des Wandelements.

Zur Fixierung der Lage des Wandelements kann im Podest in der seitlichen Führung mindestens ein magnetisierbares Element oder mindestens ein Magnet angebracht sein. Das magnetisierbare Element oder der mindestens eine Magnet wirkt dabei mit mindestens einem entsprechenden magnetisierbaren Element oder einem Magneten an einer Unterkante des Wandelements zusammen.

Durch die in der Aufnahme befindlichen mehreren Podeste können auf je einem Podest die losen Wandelemente nach der Entnahme aus dem Innenraum der Aufnahme frei in einem beliebigen Raum auf dem Boden oder auf Tischen aufgestellt werden. In jedem beliebigen Raum können die Podeste aufgestellt werden. Die herausnehmbaren Wandelemente haben an der Unterkante beispielsweise eingelassene Magnete oder magnetisierbare Elemente, welche die Wandelemente in den Podesten zusätzlich fixieren.

Ebenso können die Wandelemente auch an eine vertikale Fläche gehängt oder gelehnt werden. Die herausnehmbaren Wandelemente können auch an einer Außenfläche der Seitenwände der Aufnahme gehaltert werden. Die Halterung der herausnehmbaren Wandelemente an der Außenfläche der Seitenwände der Aufnahme kann mechanisch und/oder magnetisch sein. Die Wandelemente können somit außerhalb der Aufnahme frei im Raum auf die Podeste gestellt werden. Die mechanische Fixierung der Wandelemente an den Seitenwänden der Aufnahme kann beispielsweise über eine an der Seitenwand montierte Leiste erfolgen, in die das Wandelement eingehängt werden kann. Eine magnetische Fixierung der Wandelemente an der Außenfläche der Seitenwände der Aufnahme kann beispielsweise über Magnete erfolgen, die in dem herausnehmbaren Wandelement eingelassen sind. Das herausnehmbare Wandelement ist derart ausgestaltet, dass die Magnete von außen nicht sichtbar sind. Der Lage der Magnete im herausnehmbaren Wandelement ist entsprechend der Lage der Magnete oder magnetisierbaren Elemente in der Seitenwand der Aufnahme ausgebildet.

Mindestens eine Oberfläche der Wandelemente kann mit einer Beschichtung versehen sein, so dass die Oberfläche der Wandelemente beschreibbar und abwischbar ist. Gemäß einer weiteren Ausführungsform der Erfindung kann eine Außenfläche der Seitenwand der Aufnahme ebenfalls eine Beschichtung tragen, die beschreibbar und abwischbar ist.

Mindestens eine Oberfläche der Wandelemente kann mit einer magnetisierbaren Oberfläche versehen sein, so dass Magnete an der Oberfläche haften. Gemäß einer weiteren Ausführungsform der Erfindung kann eine Außenfläche der Seitenwand der Aufnahme ebenfalls eine magnetisierbare Oberfläche besitzen, an der Magnete haften.

Gemäß einer weiteren Ausführungsform der Erfindung kann beispielsweise auf die beschreibbare und abwischbare Oberfläche der Wandelemente und/oder auf die Außenfläche der Seitenwand jeweils eine weiche Matte mittels mechanischer und/oder magnetischer Haltemittel montiert werden. Mittels der weichen Matten können an den Wandelementen oder der Seitenwand Gegenstände mit Nadeln befestigt werden. Die Befestigung der weichen Matten an den Wandelementen oder den Seitenwänden kann mit einer Klemmvorrichtung oder Haken und Ösen befestigt erfolgen. Außerdem können die magnetischen Haltemittel für die weichen Matten als magnetisierbare Metallstücke oder Magnete ausgebildet sein, die es erlauben, die weichen Matten magnetisch an den Wandelementen und den Seitenwänden der Aufnahme zu befestigen.

Zur Aufbewahrung der weichen Matten kann in der Aufnahme mindestens ein Fach vorgesehen sein, in dem die weichen Matten gelagert werden können.

In einer Ausführungsform sind am Boden der Aufnahme mehrere Transportrollen angeordnet, mit denen die Beweglichkeit der Aufnahme erleichtert ist. Ebenso können in oder an der Aufnahme mehrere Stopper vorgesehen sein, welche auf dem Boden des Raums aufgestellt werden können, um eine freie Rotation der drehbaren fest mit der Aufnahme verbundenen Wandelemente zu verhindern.

Die erfindungsgemäße Anordnung mit der Vorrichtung kann zur Abgrenzung mindestens eines Teilraums in einem Raum verwendet werden. Wird die Vorrichtung der erfindungsgemäßen Anordnung beispielsweise bei einer Projektarbeit verwendet, müssen die erarbeiteten Projektstände während der Besprechung festgehalten werden. Bei der nächsten Besprechung kann diese Information auf den Wandelementen, welche sicher und unveränderbar in der Aufnahme gelagert sind, zur weiteren Ausarbeitung wieder zur Verfügung stehen.

Gemäß der Erfindung kann es sich um eine stationäre oder mobile Aufnahme handeln, in der ein oder mehrere beschreibbare Wandelemente aufbewahrt werden können. Die Wandelemente haben beispielsweise eine spezielle Oberflächenbeschichtung, die es ermöglicht, die Schrift auch von permanenten Faserstiften wieder abzuwischen. Zusätzlich kann auch temporär eine weiche Matte, wie beispielsweise aus Kork, Filz, Schaum etc., auf die Wandelemente aufgebracht werden. Die Wandelemente können somit als Pinnwand genutzt werden.

Anhand der beigefügten Zeichnungen werden nun die Erfindung und ihre Vorteile durch Ausführungsbeispiele näher erläutert, ohne dadurch die Erfindung auf das gezeigte Ausführungsbeispiel zu beschränken. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
- **Figur 1**: zeigt eine perspektivische Ansicht der Vorrichtung zur Aufbewahrung und Nutzung von Wandelementen.
- **Figur 2**: zeigt eine perspektivische Ansicht der Vorrichtung zur Aufbewahrung und Nutzung von Wandelementen, wobei sich einige Wandelemente in der Gebrauchsstellung außerhalb der Vorrichtung befinden.
- **Figur 3**: zeigt eine andere perspektivische Ansicht der Vorrichtung zur Aufbewahrung und Nutzung von Wandelementen aus Fig. 2, wobei sich einige Wandelemente in der Gebrauchsstellung außerhalb der Vorrichtung befinden.
- **Figur 4**: zeigt eine weitere Ausführungsform der Aufnahme für die Wandelemente.
- **Figur 5**: zeigt eine Ausführungsform der beweglichen Halterung eines herausnehmbaren Wandelements in der Aufnahme der Vorrichtung.
- **Figur 6**: zeigt eine weitere Ausführungsform der beweglichen Halterung eines herausnehmbaren Wandelements in der Aufnahme der Vorrichtung.
- **Figur 7**: zeigt eine Ausführungsform einer Führung eines herausnehmbaren Wandelements in der Aufnahme der Vorrichtung.
- **Figur 8**: zeigt eine weitere Ausführungsform einer Führung eines herausnehmbaren Wandelements in der Aufnahme der Vorrichtung.
- **Figur 9**: zeigt eine noch weitere Ausführungsform einer Führung eines herausnehmbaren Wandelements in der Aufnahme der Vorrichtung.
- **Figur 10**: zeigt eine Ausführungsform einer Aufhängung eines ausziehbaren Wandelements in der Aufnahme der Vorrichtung.
- **Figur 11**: zeigt eine weitere Ausführungsform einer Aufhängung eines ausziehbaren Wandelements in der Aufnahme der Vorrichtung.
- **Figur 12**: zeigt eine noch weitere Ausführungsform einer Aufhängung eines ausziehbaren Wandelements in der Aufnahme der Vorrichtung.
- **Figur 13**: zeigt eine noch weitere Ausführungsform einer Aufhängung eines ausziehbaren Wandelements in der Aufnahme der Vorrichtung.
- **Figur 14**: zeigt eine zusätzliche Ausführungsform einer Aufhängung eines ausziehbaren Wandelements in der Aufnahme der Vorrichtung.
- **Figur 15**: zeigt eine weitere zusätzliche Ausführungsform einer Aufhängung eines ausziehbaren Wandelements in der Aufnahme der Vorrichtung.
- **Figur 16**: zeigt eine noch weitere zusätzliche Ausführungsform einer Aufhängung eines ausziehbaren Wandelements in der Aufnahme der Vorrichtung.
- **Figur 17**: zeigt eine perspektivische Ansicht einer Ausführungsform eines Podestes zur Halterung eines der herausnehmbaren Wandelemente.
- **Figur 18**: zeigt eine perspektivische Ansicht einer weiteren Ausführungsform eines Podestes zur Halterung eines der herausnehmbaren Wandelemente.
- **Figur 19**: zeigt schematisch die Anordnung zweier Podeste zueinander, wie sie möglicherweise in der Aufnahme der Vorrichtung aufbewahrt werden können.
- **Figur 20**: zeigt eine perspektivische Ansicht eines im Podest gehalterten Wandelements.
- **Figur 21**: zeigt eine Draufsicht auf ein Wandelement mit den im oder am Wandelement angeordneten Haltemitteln.
- **Figur 22**: zeigt eine Draufsicht auf eine weiche Matte mit den in oder an der weichen Matte angeordneten Haltemitteln zur Halterung am Wandelement.
- **Figur 23**: zeigt eine schematische Darstellung einer Ausführungsform der Abgrenzung eines Teilraums mit der erfindungsgemäßen Vorrichtung.
- **Figur 24**: zeigt eine schematische Darstellung einer weiteren Ausführungsform der Abgrenzung eines Teilraums mit der erfindungsgemäßen Vorrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die Figuren stellen lediglich Ausführungsbeispiele der Erfindung dar, ohne jedoch die Erfindung auf die dargestellten Ausführungsbeispiele zu beschränken.

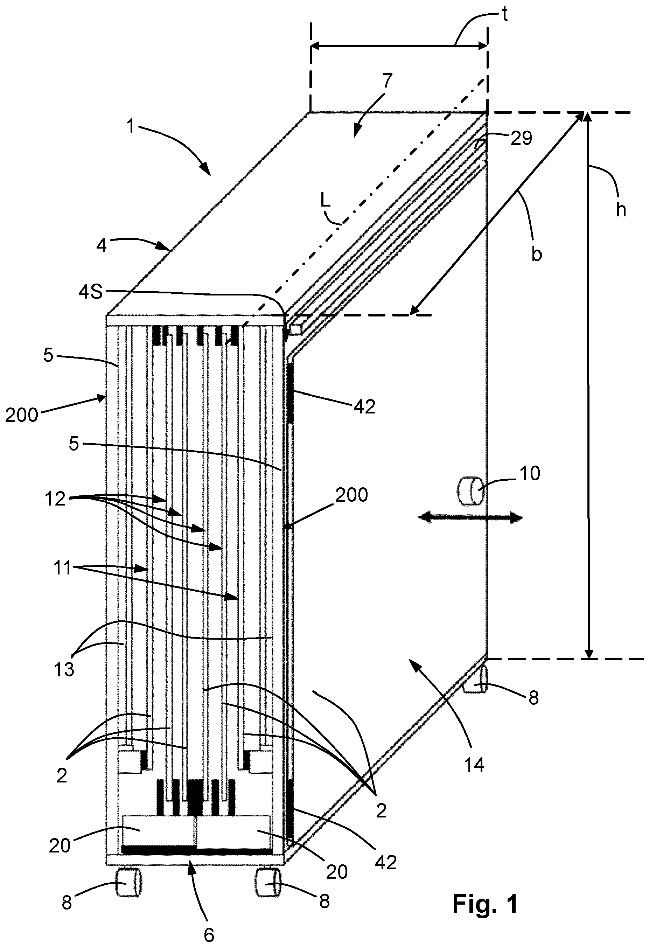

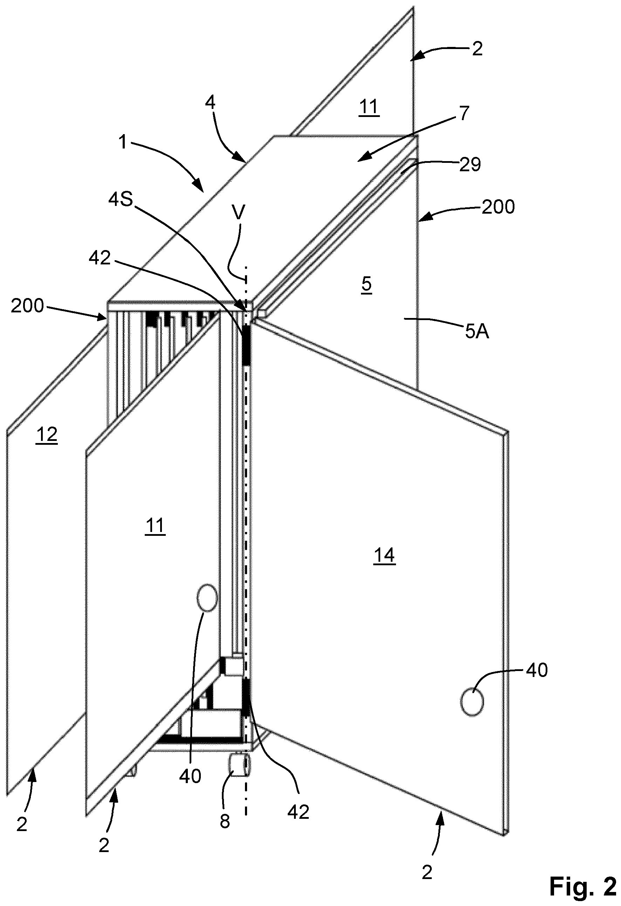

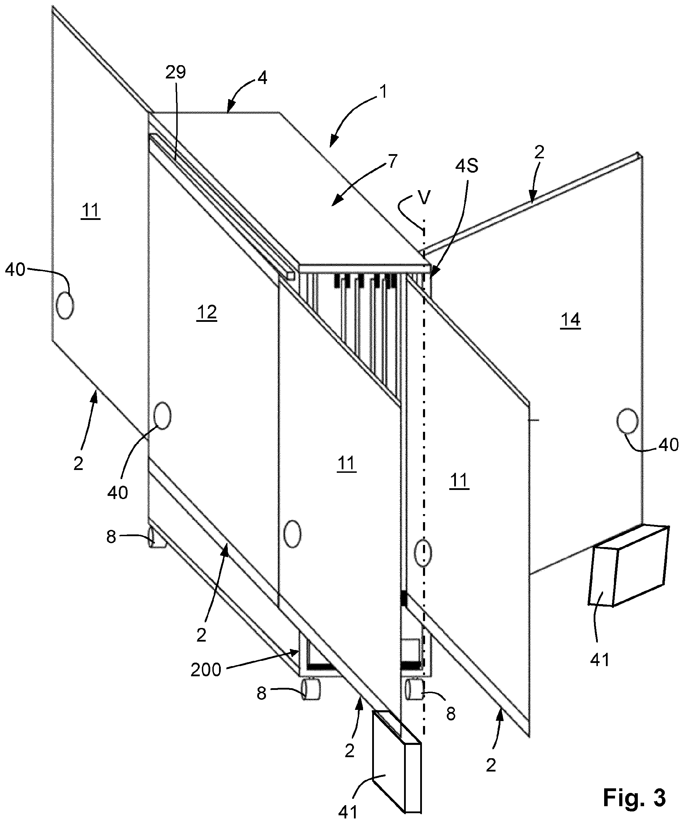

**Figur 1** zeigt eine perspektivische Ansicht einer Ausführungsform der Vorrichtung 1 zur Aufbewahrung und Nutzung von Wandelementen 2. Die Vorrichtung 1 umfasst eine Aufnahme 4 für mehrere Wandelemente 2. Bei dieser Ausführungsform wird das Konstruktionselement 200 der Aufnahme 4 durch zwei Seitenwände 5 gebildet. Auch eine Ausführung mit nur einer Seitenwand 5 ist möglich. Obwohl sich die nachfolgende Beschreibung der Figuren 1 bis 3 auf zwei Seitenwände 5 beschränkt, ist dies nicht als eine Beschränkung der Erfindung aufzufassen. Die Aufnahme 4 besteht folglich gemäß der Ausführungsform nach Fig. 1 aus zwei Seitenwänden 5, einem die Seitenwände 5 verbindenden Boden 6 und einer die Seitenwände 5 verbindenden Decke 7. Die Wandelemente 2 sind zur Lagerung komplett in der Aufnahme 4 aufgenommen. Zum Schutz der Wandelemente 2 vor unbefugtem Zugriff ist ein Schließmechanismus 10 vorgesehen, der verhindert, dass die Wandelemente 2 nicht in unerlaubter Weise aus der Aufnahme 4 ausgezogen, entnommen oder ausgeschwenkt werden. Bei der hier beschriebenen Ausführungsform ist der Schließmechanismus 10 ein Stift, der durch Öffnungen 40 (hier nicht dargestellt) in den beiden Seitenwänden 5 (Konstruktionselement 200 im Sinne der Erfindung) der Aufnahme 4 und durch entsprechende Öffnungen 40 (siehe Fig. 2 und 3) in den in der Aufnahme 4 angeordneten Wandelementen 2 greift. Diese Ausgestaltung des Schließmechanismus 10 soll nicht als Beschränkung der Erfindung aufgefasst werden. Wie eingangs beschrieben, liegt es im herkömmlichen Können eines Fachmanns, den Schließmechanismus 10 auf die verschiedensten Arten auszugestalten.

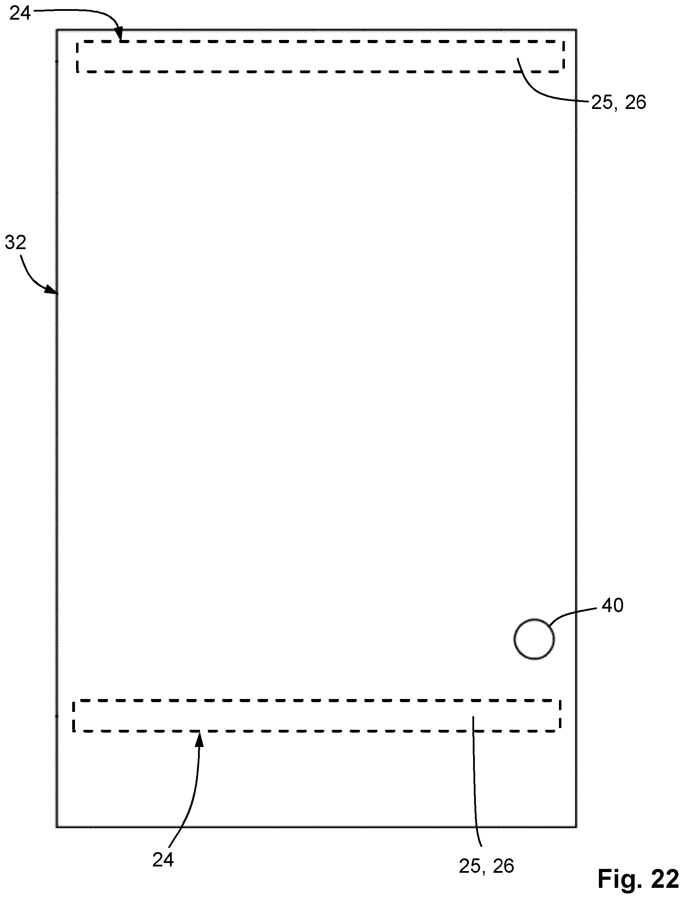

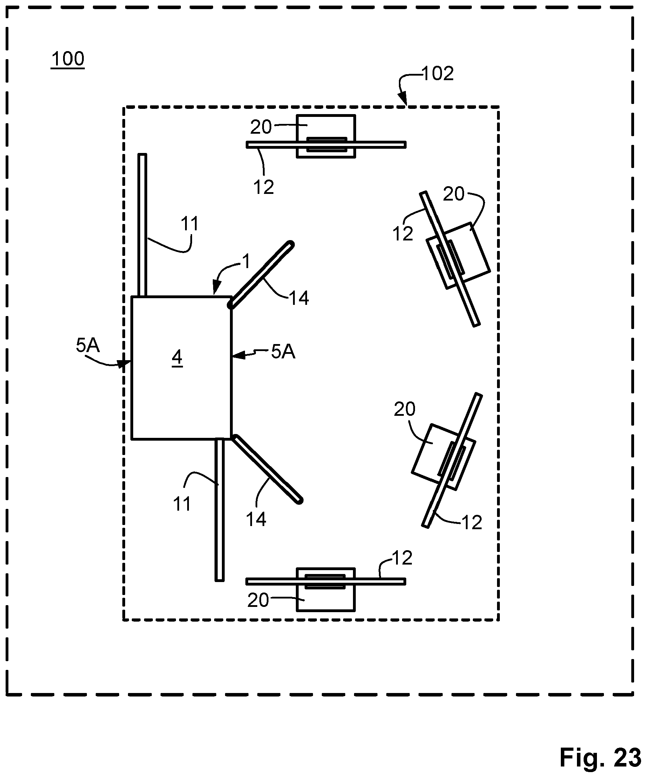

Bei der hier beschriebenen Ausführungsform der Vorrichtung 1 sind innerhalb der Aufnahme 4 sechs Wandelemente 2 untergebracht. Von den sechs Wandelementen 2 sind zwei Wandelemente 2 als ausziehbare Wandelemente 11 und vier Wandelemente 2 als herausnehmbare Wandelemente 12 ausgebildet. Die ausziehbaren Wandelemente 11 haben die Eigenschaft, dass sie zwar aus der Vorrichtung 1 herausgezogen werden können, aber im ausgezogenen Zustand mit der Vorrichtung 1 verbunden sind. Die herausnehmbaren Wandelemente 11 haben die Eigenschaft, dass diese aus der Vorrichtung 1 entnommen und frei im Raum 100 (siehe Fig. 22 und 23) in Bezug zur Vorrichtung 1 aufgestellt werden können. Die ausziehbaren Wandelemente 11 und die herausnehmbaren Wandelemente 12 können in Längsrichtung L aus der Aufnahme 4 gezogen werden, wenn der Schließmechanismus 10 geöffnet ist.

Zusätzlich kann mindestens ein schwenkbares Wandelement 14 an der Seitenwand 5 an der Außenfläche 5A der Aufnahme 4 vorgesehen sein. In einer beispielhaften Ausgestaltung der Erfindung können an jeder Stirnseite 4S der Aufnahme 4 jeweils ein schwenkbares Wandelement 14 mittels eines Scharniers 42 angelenkt sein. In der maximalen Ausstattung der Vorrichtung 1 sind an jeder Stirnseite 4S schwenkbare Wandelemente 14 vorgesehen, die um eine vertikale Achse V (siehe Figur 2) geschwenkt werden können. In der maximalen Ausstattung sind somit vier schwenkbare Wandelemente 14 möglich.

Am Boden 6 der Aufnahme 4 können zur leichteren Bewegung der Aufnahme 4 Transportrollen 8 angeordnet sein.

Bei der hier beschriebenen Ausführungsform sind am Boden 6 der Aufnahme 4 herausnehmbare Podeste 20 positioniert. In die herausnehmbaren Podeste 20 können die herausnehmbaren Wandelemente 12 abgesetzt und frei in einem Raum 100 (siehe Fig. 22 und 23) gehaltert werden. Da bei dieser Ausführungsform vier herausnehmbare Wandelemente 12 in der Aufnahme 4 vorgesehen sind, sind folglich in der Aufnahme 4 vier herausnehmbare Podeste 20 vorgesehen. Wie bereits eingangs erwähnt, soll die Anzahl der in der Aufnahme 4 vorgesehenen, ausziehbaren Wandelemente 11 und/oder der herausnehmbaren Wandelemente 12 nicht als eine Beschränkung der Erfindung aufgefasst werden. Je nach Kundenwunsch kann die Innenausstattung (Anzahl der ausziehbaren Wandelemente 11 und/oder der herausnehmbaren Wandelemente 12) und auch die Außenausstattung (schwenkbare Wandelemente 14) der Aufnahme 4 konfigurieret werden.

Die Aufnahme 4 der Vorrichtung 1 besitzt eine Höhe h, eine Breite b und eine Tiefe t. Die mögliche Höhe h der Aufnahme 4 beträgt 200 cm. Die mögliche Breite b der Aufnahme 4 beträgt 140 cm. Die mögliche Tiefe t der Aufnahme 4 beträgt 50 cm. Die hier aufgeführten Angaben von Höhe h, Breite b und Tiefe t sollen nicht als Beschränkung der Erfindung aufgefasst werden. Je nach Kundenwunsch können Höhe h, Breite b und Tiefe t entsprechend ausgelegt werden.

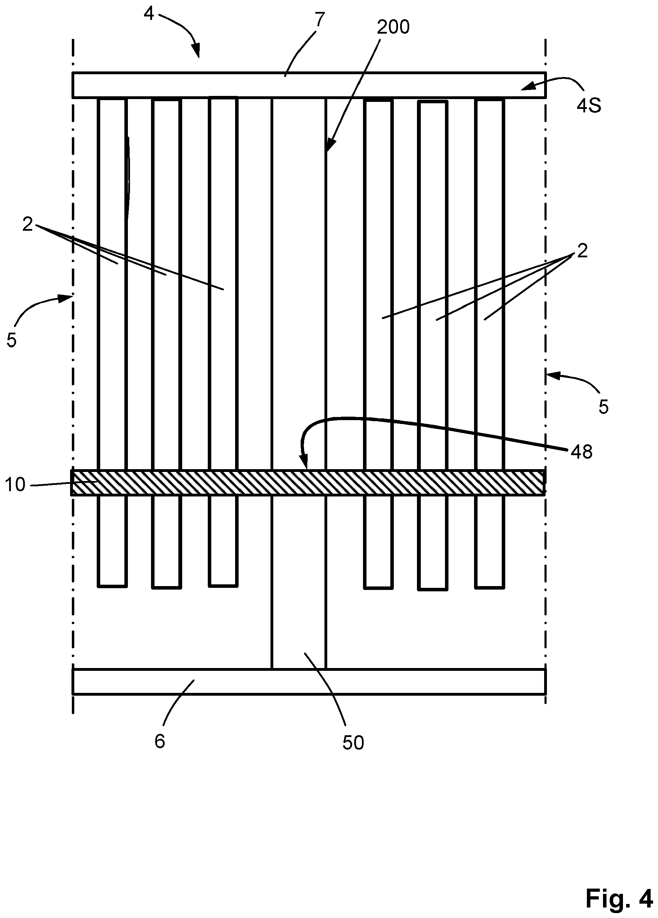

**Figur 2** und **Figur 3** zeigen jeweils eine perspektivische Ansicht der Vorrichtung 1 zur Aufbewahrung und Nutzung von Wandelementen 2, wobei sich einige Wandelemente 2 in der Gebrauchsstellung außerhalb der Aufnahme 4 der Vorrichtung 1 befinden. In der Gebrauchsstellung befinden sich einige ausziehbare Wandelemente 11, einige herausnehmbare Wandelemente 12 und die schwenkbaren Wandelemente 14. Jedes der in dieser Ausführungsform beschriebenen Wandelemente 2 hat eine Öffnung 40 ausgebildet. Wie bereits in der Beschreibung zu Figur 1 erwähnt, fluchten die Öffnungen 40 der Wandelemente 2 mit den Öffnungen (nicht dargestellt) in den Seitenwänden 5 beziehungsweise dem mindestens einen Konstruktionselement 200 (siehe Fig. 4), damit der Schließmechanismus 10 eingeführt werden kann. Der Schließmechanismus 10 greift somit durch die Öffnungen 40 in den Wandelementen 2 und durch eine Öffnung 48 (siehe Fig. 4) in dem mindestens einen Konstruktionselement 200 der Vorrichtung 1. Somit sind bei geschlossenem Schließmechanismus 10 Wandelemente 2 sicher in der Vorrichtung 1 untergebracht und können nicht unberechtigt aus der Vorrichtung 1 entnommen werden.

Die Anlenkung des mindestens einen schwenkbaren Wandelements 14 ist mit dem Scharnier 42 derart gestaltet, dass eine Schwenkbewegung um die vertikale Achse V mit einem Drehwinkel von bis zu 270 Grad erlaubt ist. Im geschlossenen Zustand ist, wie in Fig. 1 gezeigt, das schwenkbare Wandelement 14 an die Seitenwand 5 der Aufnahme 4 geschwenkt. Im geöffneten Zustand (Gebrauchszustand) wird es von der Seitenwand 5 der Aufnahme 4 weggeschwenkt.

Wie aus den Darstellungen der vorangehenden Figuren 1 bis 3 ersichtlich ist, können an der Aufnahme 4 an der Außenfläche 5A der Seitenwände 5 der Aufnahme 4 die schwenkbaren Wandelemente 14 oder die herausnehmbaren Wandelemente 12 oder die ausziehbaren Wandelemente 11 befestigt beziehungsweise gehaltert werden. Die Ausführungsform der mechanischen Fixierung der Wandelemente 2, insbesondere der herausnehmbaren Wandelemente 12, kann an den Seitenwänden 5 der Aufnahme 4 über eine an der Seitenwand 5 montierte Leiste 29 erfolgen. Das herausnehmbare Wandelement 12 wird in die Leiste 29 eingehängt und ist somit an der Seitenwand 5 der Aufnahme 4 gehaltert.

In oder an der Aufnahme 4 befindet sich mindestens ein Stopper 41, welcher beispielsweise auf den Boden der Raums 100 (siehe Fig. 22 und 23) aufgestellt werden kann, um eine freie Schwenkbewegung der fest mit der Aufnahme 4 verbundenen schwenkbaren Wandelemente 14 zu verhindern. Ebenso kann der Stopper 41 direkt mit dem schwenkbaren Wandelement 14 oder einem ausziehbaren Wandelement 11 verbunden sein. Der Stopper 41 macht Sinn, da dadurch beim Schreiben auf dem schwenkbaren Wandelement 14 oder einem ausziehbaren Wandelement 11 dieses in seiner Lage fixiert ist und somit eine stabile Schreibfläche bereitstellt.

**Figur 4** zeigt eine weitere Ausführungsform der erfindungsgemäßen Aufnahme 4 der Vorrichtung 1 für die Wandelemente 2. Hier ist mindestens ein Konstruktionselement 200 vorgesehen, das den Boden 6 mit der Decke 7 der Aufnahme 4 verbindet und beide haltert. Das Konstruktionselement 200 kann gemäß der hier vorgeschlagenen Ausführungsform eine Säule 50 oder eine durchgehende Wand 50 oder eine teilweise durchgehende Wand 50 sein, die eine Öffnung 48, für die Aufnahme des Schließmechanismus 10 ausgebildet hat. Der bei dieser Ausführungsform beschriebene Schließmechanismus 10 kann beispielsweise ein Stift sein, der durch Öffnungen 40 (hier nicht dargestellt) in den in der Aufnahme 4 angeordneten Wandelementen 2 greift. Diese

Ausgestaltung des Schließmechanismus 10 soll nicht als Beschränkung der Erfindung aufgefasst werden. Wie eingangs beschrieben, liegt es im herkömmlichen Können eines Fachmanns, den Schließmechanismus 10 auf die verschiedensten Arten auszugestalten, so dass der Schließmechanismus 10 derart mit dem Konstruktionselement 200 zusammenwirkt, dass bei geschlossenem Schließmechanismus 10 ein unbefugtes Herausnehmen der Wandelemente 2 aus der Aufnahme 4 unterbunden ist. Die Decke 7 und der Boden 6 der Aufnahme 4 definieren jeweils zwei gegenüberliegende, virtuelle Seiten 5, die durch Wandelemente 2, die mechanisch und/oder magnetisch an der Decke 7 angebracht sind, zum Teil verschlossen werden können.

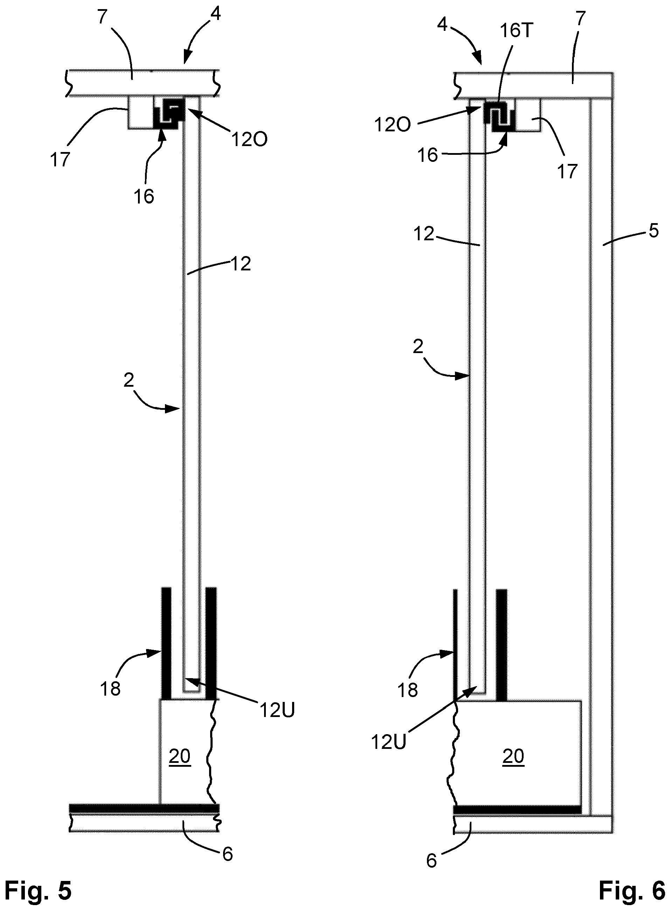

Die **Figuren 5 und 6** zeigen verschiedene Ausführungsformen der hängenden Halterung eines Wandelementes 2 in der Aufnahme 4 der Vorrichtung 1. Das Wandelement 2 ist ein herausnehmbares Wandelement 12. Die herausnehmbaren Wandelemente 12 sind an einem oberen Ende 120 hängend an einer in Längsrichtung L der Aufnahme 4 verlaufenden Linearführung 16 geführt. Ein Teil der Linearführung 16 ist an einer Halterung 17 an der Decke 7 befestigt. Ein anderer Teil der Linearführung 16 ist an dem herausnehmbaren Wandelement 12 befestigt. Die hängend geführten und herausnehmbaren Wandelemente 12 sind an einem unteren Ende 12U der Wandelemente 12 in einer seitlichen Führung 18 geführt. Bei den in den Figuren 4 und 5 dargestellten Ausführungsformen sind die seitlichen Führungen 18 jeweils auf einem Podest 20 vorgesehen, das auf dem Boden 6 der Aufnahme 4 positioniert ist.

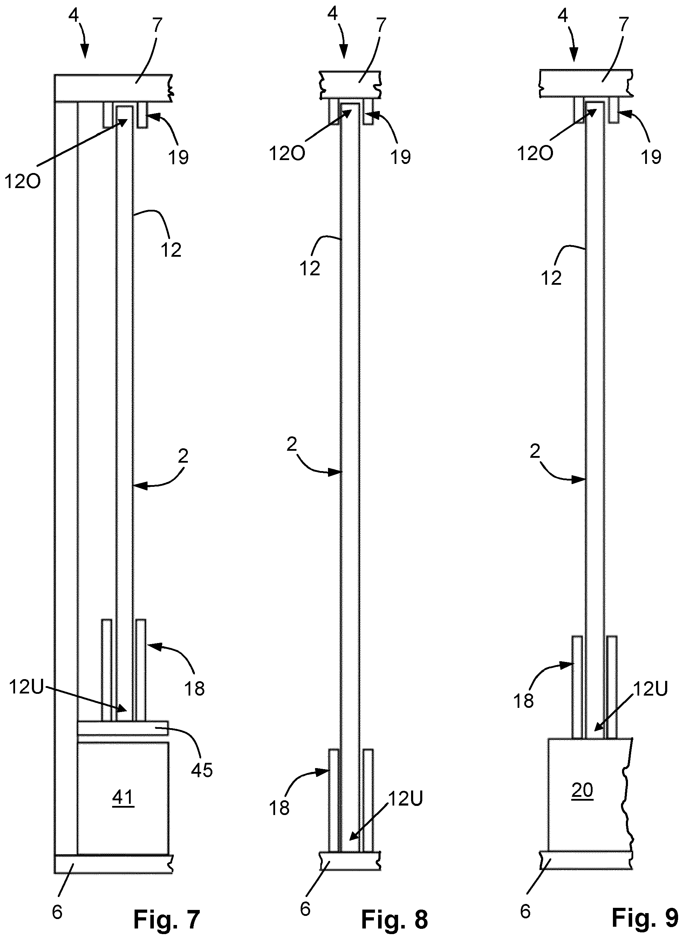

Die **Figuren 7 bis 9** zeigen verschiedene Ausführungsformen einer Führung eines herausnehmbaren Wandelements 12 in der Aufnahme 4 der erfindungsgemäßen Vorrichtung 1. Die herausnehmbaren Wandelemente 12 sind an einem unteren Ende 12U stehend in einer seitlichen Führung 18 in Längsrichtung L der Aufnahme 4 und an einem oberen Ende 120 frei in einem Führungselement 19 an der Decke 7 der Aufnahme 4 geführt. Bei der in Figur 7 gezeigten Ausführungsform ist die seitliche Führung 18 des herausnehmbaren Wandelementes 12 auf einer Tragplatte 45 über dem Boden 6 der Aufnahme 4 vorgesehen. In dem Zwischenraum zwischen Tragplatte 45 und Boden 6 können in der Aufnahme 4 die Stopper 41 oder auch die Podeste 20 untergebracht werden. Bei der in Figur 8 gezeigten Ausführungsform ist die seitliche Führung 18 direkt auf dem Boden 6 der Aufnahme 4 angebracht. Das herausnehmbare Wandelement 12 entspricht somit in etwa der Höhe h der Aufnahme 4. Bei der in Figur 9 gezeigten Ausführungsform ist die seitliche Führung 18 auf einem Podest 20 vorgesehen, das in der Aufnahme 4 auf dessen Boden 6 positioniert ist. Wie bereits erwähnt, können die Podeste 20 aus der Aufnahme 4 entnommen werden, um die herausnehmbaren Wandelemente 12 frei im Raum 100 (siehe Fig. 22 und 23) aufzustellen.

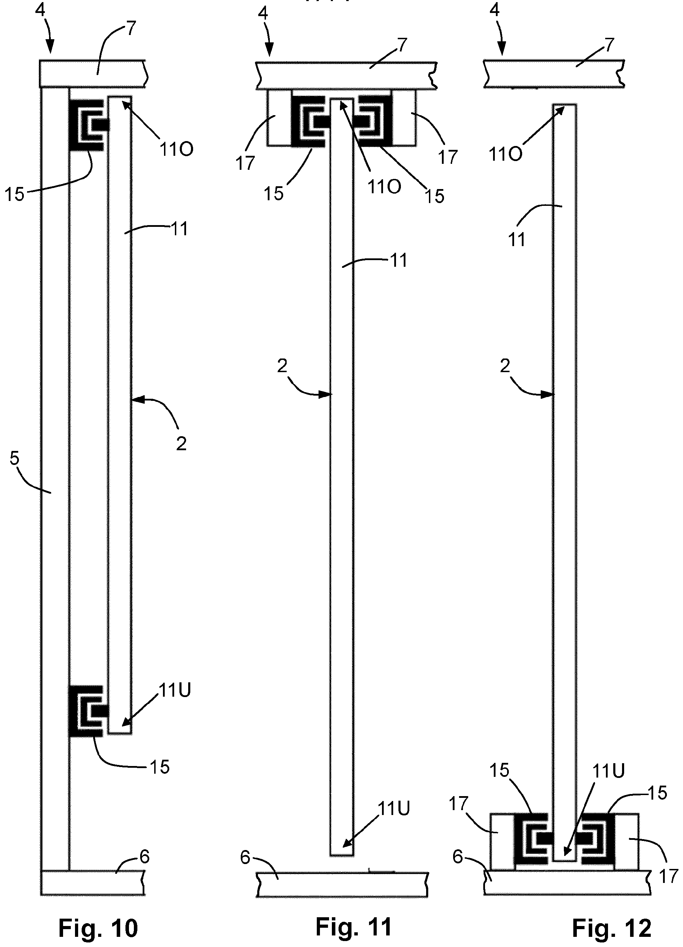

Die **Figuren 10 bis 16** zeigen Ausführungsformen einer Aufhängung eines ausziehbaren Wandelements 11 in der Aufnahme 4 der Vorrichtung 1, welche sich mit mindestens einem Auszug 15 in Längsrichtung L der Aufnahme 4 derart verschieben lassen, dass die ausziehbaren Wandelemente 11 von beiden Seiten zugänglich sind. Die Auszüge 15 können als Auszugsschienen ausgebildet sein. Die Auszugsschienen können Teleskopauszüge sein. Bei der in Figur 10 gezeigten Ausführungsform sind zwei Auszüge 15 an der Seitenwand 5 der Aufnahme 4 befestigt. Die Auszüge 15 sind derart angeordnet, dass sie im Bereich des oberen Endes 11O und im Bereich des unteren Endes 11 U mit dem ausziehbaren Wandelement 11 verbunden sind

Bei der in **Figur 11** gezeigten Ausführungsform ist das ausziehbare Wandelement 11 hängend an der Decke 7 mittels zweier Auszüge 15 angeordnet. Das untere Ende 11U ist frei über dem Boden 6 der Aufnahme 4 beweglich. An der Decke 7 der Aufnahme 4 sind zwei Halterungen 17 angebracht, von denen jede jeweils einen Auszug 15 trägt. Die Auszüge 15 sind gegenüberliegend mit dem oberen Ende 11O des ausziehbaren Wandelements 11 verbunden.

Bei der in **Figur 12** gezeigten Ausführungsform ist das ausziehbare Wandelement 11 stehend am Boden 6 mittels zweier Auszüge 15 angeordnet. Das obere Ende 11O ist frei zu der Decke 7 der Aufnahme 4 beweglich. Am Boden 6 der Aufnahme 4 sind zwei Halterungen 17 angebracht, von denen jede jeweils einen Auszug 15 trägt. Die Auszüge 15 sind gegenüberliegend mit dem unteren Ende 11U des ausziehbaren Wandelements 11 verbunden.

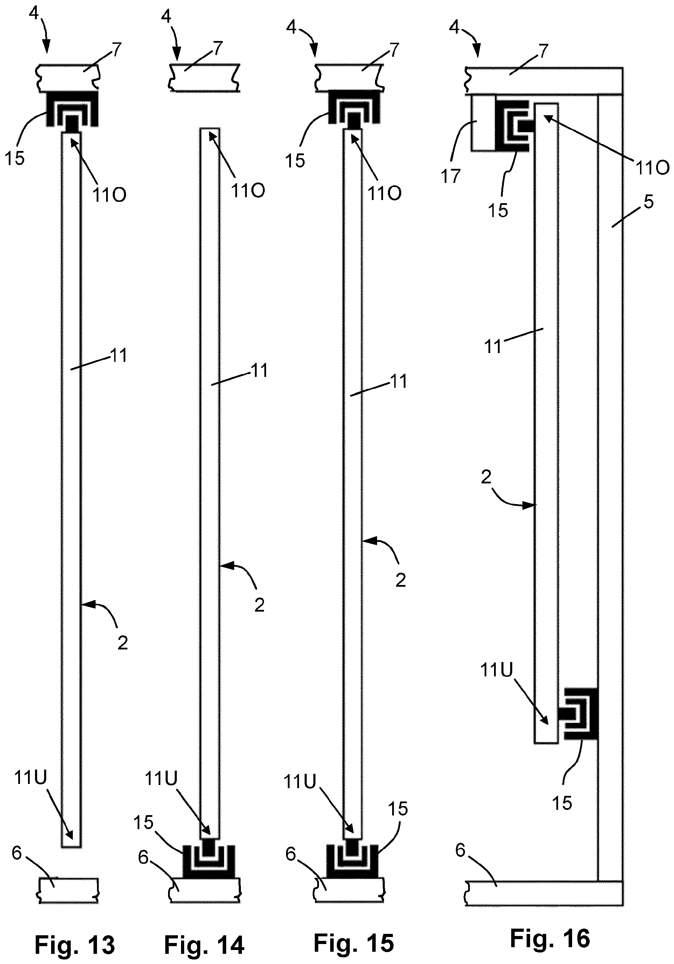

Bei der in **Figur 13** gezeigten Ausführungsform ist das ausziehbare Wandelement 11 hängend an der Decke 7 mittels eines Auszugs 15 gehaltert. Das untere Ende 11U ist frei über dem Boden 6 der Aufnahme 4 beweglich. Der Auszug 15 ist an der Decke 7 montiert und direkt mit dem oberen Ende 11O des ausziehbaren Wandelements 11 verbunden.

Bei der in **Figur 14** gezeigten Ausführungsform ist das ausziehbare Wandelement 11 stehend am Boden 6 mittels eines Auszugs 15 gehaltert. Das obere Ende 11O ist frei zu der Decke 7 der Aufnahme 4 beweglich. Der Auszug 15 ist am Boden 6 montiert und direkt mit dem unteren Ende 11U des ausziehbaren Wandelements 11 verbunden.

Bei der in **Figur 15** gezeigten Ausführungsform ist das ausziehbare Wandelement 11 über zwei Auszüge 15 ausziehbar gelagert. Dabei ist ein Auszug 15 an der Decke 7 der Aufnahme 4 und ein weiterer Auszug 15 am Boden 6 der Aufnahme 4 montiert. Die beiden Auszüge 15 sind direkt mit dem oberen Ende 11O beziehungsweise dem unteren Ende 11U des ausziehbaren Wandelements 11 verbunden.

Bei der in **Figur 16** gezeigten Ausführungsform ist das ausziehbare Wandelement 11 ebenfalls über zwei Auszüge 15 ausziehbar gelagert. Ein Auszug 15 ist dabei an eine an der Decke 7 der Aufnahme 4 angebrachte Halterung 17 gehaltert und im Bereich des oberen Endes 11O mit dem ausziehbaren Wandelement 11 verbunden. Der andere Auszug 15 ist mit der Seitenwand 5 der Aufnahme 4 und im Bereich des unteren Endes 11U mit dem ausziehbaren Wandelement 11 verbunden. Das ausziehbare Wandelement 11 ist somit zwischen den beiden Auszügen 15 stabil gelagert.

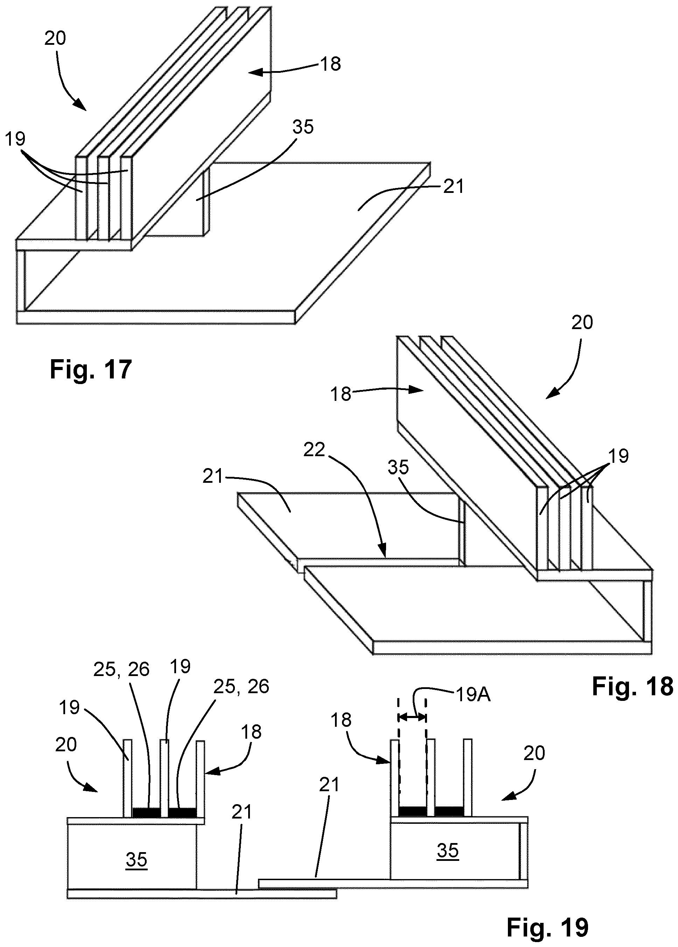

**Figur 17** und **Figur 18** zeigen verschiedene perspektivische Ansichten einer Ausführungsform eines Podestes 20 zur Halterung einer der herausnehmbaren Wandelemente 12. Wie der Darstellung der Figur 1 zu entnehmen ist, können die Podeste 20 in der Aufnahme 4 untergebracht und bei Bedarf aus der Aufnahme 4 entnommen werden. Jedes Podest 20 hat eine Aufstellfläche 21 ausgebildet. Über der Aufstellfläche 21 hat das Podest 20 die seitliche Führung 18 ausgebildet, mit der die herausnehmbaren Wandelemente 12 gehaltert werden können, wenn das Podest 20 im freien Raum 100 (siehe Fig. 22 und 23) aufgestellt wird. Die seitliche Führung 18 umfasst mindestens zwei voneinander beabstandete Führungselemente 19. Zur platzsparenden Unterbringung der Podeste 20 (siehe Fig. 1) hat das in Fig. 18 dargestellte Podest 20 einen Schlitz 22 ausgebildet. Mittels des Schlitzes 22 kann das Podest 20 den Steg 35 des anderen Podestes 20 aufnehmen.

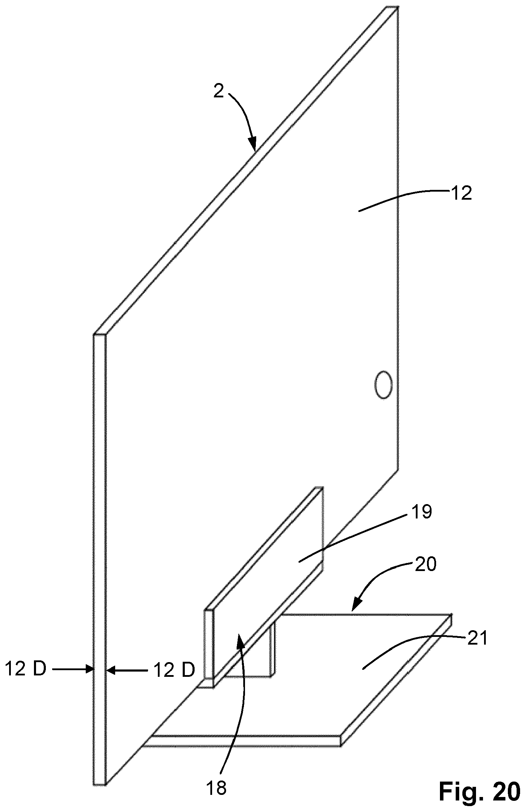

**Figur 19** zeigt schematisch die Anordnung zweier Podeste 20 zueinander und deren Ausgestaltung, um die Podeste 20 für die herausnehmbaren Wandelemente 12 in möglichst platzsparender Art und Weise in der Aufnahme 4 der Vorrichtung 1 aufzubewahren. Dabei kommt eine Aufstellfläche 21 eines der Podeste 20 über der Aufstellfläche 21 des anderen Podestes 20 zu liegen. Der Schlitz 22 dient als Führung und Lagefixierung der ineinander geschobenen Podeste 20. Zwischen den Führungselementen 19 der Podeste 20 sind mindestens ein magnetisierbares Element 25 oder mindestens ein Magnet 26 eingelassen, welche die herausnehmbaren Wandelemente 12 im Podest 20 zusätzlich magnetisch fixieren. Um das Einsetzen eines herausnehmbaren Wandelementes 12 in das Podest 20 zu erleichtern, ist ein Abstand 19A zweier Führungselemente 19 größer als eine Dicke 120 (siehe Figur 20) des Wandelements 2 (beziehungsweise herausnehmbaren Wandelements 12).

**Figur 20** zeigt eine perspektivische Ansicht eines Podests 20 des gehalterten Wandelements 2, das als ein herausnehmbares Wandelement 12 ausgebildet ist. Mit der Aufstellfläche 21 kann das Podest 20 auf dem Boden (nicht dargestellt) eines Raumes 100 (siehe Fig. 22 und 23) aufgestellt werden. Die Führungselemente 19 der seitlichen Führung 18 geben dem herausnehmbaren Wandelement 12 den erforderlichen Halt, der mit den in Fig. 19 beschriebenen magnetisierbaren Elementen 25 oder dem mindestens einen Magneten 26 gesichert werden kann.

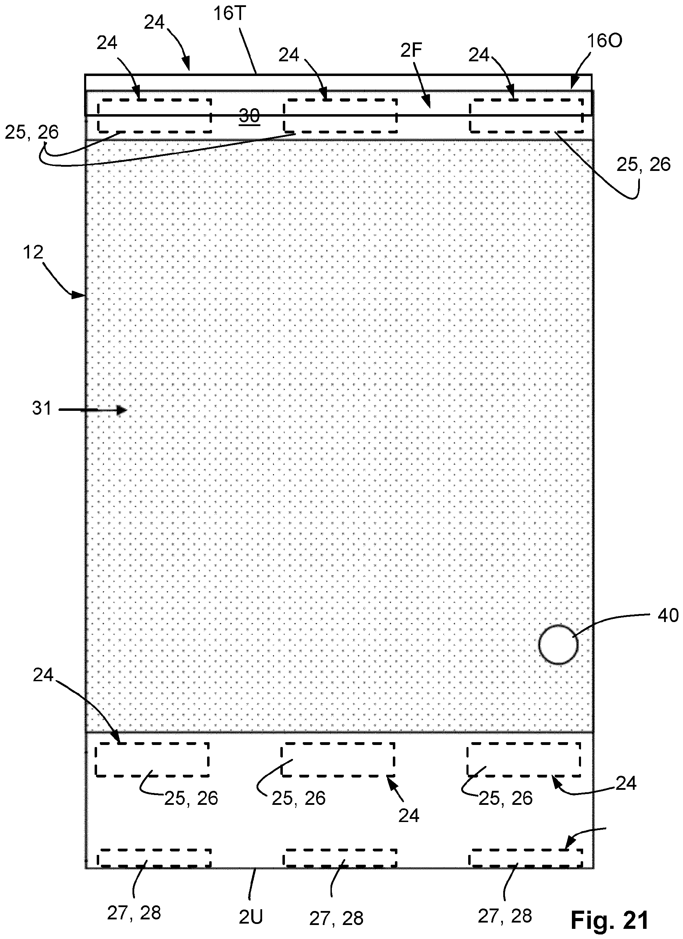

**Figur 21** zeigt eine Draufsicht auf ein herausnehmbares Wandelement 12 mit den im oder am herausnehmbaren Wandelement 12 angeordneten Haltemitteln 24. Bei der hier dargestellten Ausführungsform ist das Haltemittel 24 am oberen Ende 120 ein Teil 16T der Linearführung 16 (siehe Fig. 5), welche sich im Innenraum der Aufnahme 4 befindet. Der Teil 16T kann beispielsweise in die Leiste 29 an der Außenfläche 5A der Seitenwand 5 der Aufnahme 4 eingehängt werden. Die Haltemittel 24 können magnetisch und/oder mechanischer Natur sein. Obwohl sich die nachfolgende Beschreibung auf die magnetischen Eigenschaften der Haltemittel 24 beschränkt, soll dies nicht als Beschränkung der Erfindung aufgefasst werden. Es ist für einen Fachmann vorstellbar, dass die Haltemittel 24 eine Kombination aus magnetischen und mechanischen Haltemitteln 24, rein magnetische Haltemittel 24 oder rein mechanische Haltemittel 24 umfassen können. Für den Fall rein magnetischer Haltemittel 24 sind die Haltemittel 24 in Form von mindestens einem magnetisierbaren Element 25 oder mindestens einem Magneten 26 ausgebildet. Ebenso ist mindestens ein entsprechendes magnetisierbares Element 27 oder ein Magnet 28 an einer Unterkante 2U des herausnehmbaren Wandelements 12 vorgesehen. Das mindestens eine magnetisierbare Element 27 oder der mindestens eine Magnet 28 an der Unterkante 2U des herausnehmbaren Wandelements 12 wirken zur Fixierung des herausnehmbaren Wandelements 12 im Podest 20 mit dem dort vorgesehenen magnetisierbaren Element 25 oder dem mindestens einen Magnet 26 zusammen. Die magnetisierbaren Elemente 25 oder der mindestens eine Magnet 26 kann neben dem Teil 16T der Linearführung 16 am Wandelement 12 auch unterstützend zur Fixierung des herausnehmbare Wandelements 12 an der Außenfläche 5A der Seitenwand verwendet werden. Hierzu ist in dem herausnehmbaren Wandelement 12 mindestens ein magnetisierbares Element 25 oder mindestens ein Magnet 26 eingelassen, der mit mindestens einem entsprechenden magnetisierbaren Element (nicht dargestellt) oder mit mindestens einem Magnet (nicht dargestellt) der Seitenwand 5 der Aufnahme 4 zusammenwirkt. Das mindestens eine magnetisierbare Element 25 oder der mindestens eine Magnet 26 können in allen Wandelementen 2 (ausziehbare Wandelemente 11 und herausnehmbare Wandelemente 12) vorgesehen sein. Mindestens eine Oberfläche 2F der Wandelemente 2 ist mit einer Beschichtung 30 versehen, die das mindestens eine magnetisierbare Element 25 oder den mindestens einen Magneten 26 verdeckt und die beschreibbar und abwischbar ist. Bei der in Figur 21 dargestellten Ausführungsform kann zusätzlich auf einem Teil der Oberfläche 2F des Wandelements 2 ein magnetisierbares Material 31 aufgebracht sein, an der bewegliche Magnete haften können. Das Wandelement 2 hat die für die Verriegelung erforderliche Öffnung 40 ausgebildet.

**Figur 22** zeigt eine Draufsicht auf eine weiche Matte 32. Bei der hier gezeigten Ausführungsform sind in der weichen Matte 32 Haltemittel 24 vorgesehen. Die Haltemittel 24 sind als magnetisierbare Elemente 25 oder als Magnete 26 ausgebildet. Zur Anbringung der weichen Matte 32 am Wandelement 2 (ausziehbares Wandelement 11, herausnehmbares Wandelement 12 oder schwenkbares Wandelement 14) oder an der Außenfläche 5A der Seitenwand 5 sind im Wandelement 2 oder der Seitenwand 5 entsprechende magnetisierbare Elemente 25 oder Magnete 26 vorgesehen. Die weiche Matte 32 hat ebenfalls eine Öffnung 40 ausgeformt, die mit einer Öffnung 40 des Wandelements 2 fluchtet, um die Verriegelung zu ermöglichen. Wie der Figur 1 zu entnehmen ist, besitzt die Aufnahme 4 mindestens ein Fach 13, in dem die weichen Matten 32 gelagert werden können.

**Figur 23** zeigt eine schematische Darstellung einer Ausführungsform der Abgrenzung eines Teilraums 102 mit der erfindungsgemäßen Vorrichtung 1 in dem zur Verfügung stehenden Raum 100. Die die hier dargestellte Vorrichtung 1 umfasst zwei ausziehbare Wandelemente 11 und vier herausnehmbare Wandelemente 12. Wenn auch die beiden Außenflächen 5A beschreibbar beziehungsweise nutzbar sind, stehen insgesamt vierzehn beschreibbare beziehungsweise nutzbare Flächen zur Verfügung (ohne die schwenkbaren Wandelemente 14). Jedes der herausnehmbaren Wandelemente 12 ist in einem Podest 20 gehaltert, das auch in der Aufnahme 4 der Vorrichtung 1 untergebracht werden kann. Sind, wie hier dargestellt, auch schwenkbare Wandelemente 14 vorgesehen, so erhöht sich selbstverständlich die Anzahl der beschreibbaren beziehungsweise nutzbaren Flächen.

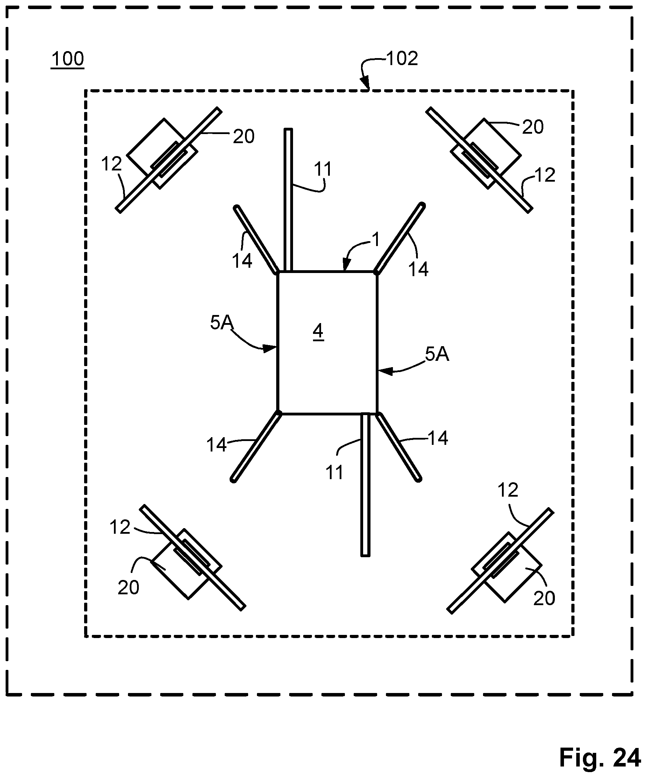

**Figur 24** zeigt eine schematische Darstellung einer weiteren Ausführungsform der Abgrenzung eines Teilraums 102 mit der erfindungsgemäßen Vorrichtung 1 in dem zur Verfügung stehenden Raum 100. Die Ausstattung der Vorrichtung 1 entspricht der in Fig. 23 beschriebenen Ausstattung. Bei dieser Anordnung ist die Aufnahme 4 mit den herausgezogenen ausziehbaren Wandelementen 11 von den vier Podesten 20 umgeben, die jeweils ein herausnehmbares Wandelement 12 haltern. Zusätzlich sind bei dieser Ausführungsform an der Aufnahme 4 vier schwenkbare Wandelemente 14 vorgesehen. Die Anzahl der an der Aufnahme 4 vorgesehenen und schwenkbaren Wandelemente 14 soll nicht als Beschränkung der Erfindung aufgefasst werden.

Die in der Aufnahme 4 vorhandenen Wandelemente 2 können als Präsentationswände oder Raumgliederungselemente genutzt werden. Die Wandelemente 2 sowie die Außenflächen 5A der Seitenwände 5 der Aufnahme 4 sind beschreibbar und abwischbar. Ebenso können sie mit einer Oberfläche versehen sein, an der metallische Gegenstände und Magnete haften. In die Seitenwände 5 der Aufnahme 4 in allen Wandelementen 2 sind unter der Oberfläche magnetisierbare Elemente 25 oder Magnete 26 eingelassen, an denen weiche Matten 32 befestigt werden können, die beispielsweise einen magnetisierbaren Metallstreifen besitzen. Auf den weichen Matten 32 können Gegenstände mit Nadeln befestigt oder eingesteckt werden.

### Bezugszeichenliste

- 1: Vorrichtung
- 2: Wandelement
- 2F: Oberfläche
- 2U: Unterkante
- 4: Aufnahme
- 4S: Stirnseite
- 5: Seitenwand, Seite
- 5A: Außenfläche
- 6: Boden
- 7: Decke
- 8: Transportrollen
- 9: Innenraum
- 10: Schließmechanismus
- 11: ausziehbares Wandelement
- 11O: oberes Ende
- 11U: unteres Ende
- 12: herausnehmbares Wandelement
- 120: Dicke
- 120: oberes Ende
- 12U: unteres Ende
- 13: Fach
- 14: schwenkbares Wandelement
- 15: Auszug
- 16: Linearführung
- 16T: Teil der Linearführung am Wandelement
- 17: Halterung
- 18: seitliche Führung
- 19: Führungselemente
- 19A: Abstand
- 20: Podest
- 21: Aufstellfläche
- 22: Schlitz
- 23: Breite
- 24: Haltemittel
- 25: magnetisierbares Element
- 26: Magnet
- 27: magnetisierbares Element
- 28: Magnet
- 29: Leiste
- 30: Beschichtung
- 31: magnetisierbares Material
- 32: weiche Matte
- 35: Steg
- 40: Öffnung
- 41: Stopper
- 42: Scharnier
- 45: Tragplatte
- 48: Öffnung
- 50: Säule
- 100: Raum
- 102: Teilraum
- 200: Konstruktionselement
- b: Breite
- h: Höhe
- L: Längsrichtung
- t: Tiefe
- V: vertikale Achse

## Patentansprüche

1. Anordnung umfassend mindestens ein Wandelement (2) und eine Vorrichtung (1) zur Aufbewahrung und Nutzung des mindestens einen Wandelements (2),
wobei die Vorrichtung (1) eine Aufnahme (4) für das mindestens eine Wandelement (2) umfasst, wobei die Aufnahme (4) mindestens ein Konstruktionselement (200) umfasst, das einen Boden (6) und eine Decke (7) der Aufnahme (4) verbindet,
**gekennzeichnet durch**
eine Öffnung (40), die in jedem der Wandelemente (2) ausgebildet ist;
eine Öffnung (48), die in dem mindestens einen Konstruktionselement (200) ausgebildet ist; und
einen Schließmechanismus (10) der Vorrichtung (1), der durch die Öffnung (48) des mindestens einen Konstruktionselements (200) und durch jede der Öffnungen (40) der Wandelemente (2) greift, wodurch die Wandelemente (2) in der Aufnahme (4) der Vorrichtung (1) gegen unbefugtes Herausnehmen gesichert sind.

2. Anordnung nach Anspruch 1, wobei das mindestens eine Konstruktionselement (200) zumindest eine Seitenwand (5) oder zumindest eine Säule (50), eine durchgehende Wand (50) oder eine teilweise durchgehende Wand (50) ist, die den Boden (6) und die Decke (7) verbindet und haltert.

3. Anordnung nach einem der vorangehenden Ansprüche, wobei die in der Aufnahme 4 untergebrachten Wandelemente (2) als ausziehbare Wandelemente (11) ausgebildet sind, die an mindestens einem oberen Ende (11O) und/oder einem unteren Ende (11U) über mindestens einen in einer Längsrichtung (L) der Aufnahme (4) verlaufenden Auszug (15) gehaltert sind, und/oder die als herausnehmbare Wandelemente (12) ausgebildet sind, die an einem oberen Ende (120) hängend an einer in Längsrichtung (L) der Aufnahme (4) verlaufenden Linearführung (16) geführt sind oder die hängend geführten und herausnehmbaren Wandelemente (12) an einem unteren Ende (12U) der Wandelemente (12) in einer seitlichen Führung (18) geführt sind, oder die herausnehmbaren Wandelemente (12) an einem unteren Ende (12U) stehend in einer seitlichen Führung (18) in Längsrichtung (L) der Aufnahme (4) und an einem oberen Ende (120) frei in einem Führungselement (19) an der Decke (7) der Aufnahme (4) geführt sind, wobei die seitliche Führung (18) für das untere Ende (12U) des herausnehmbaren Wandelementes (12) direkt auf dem Boden (6) der Aufnahme (4), auf einer Tragplatte (45) über dem Boden (6) der Aufnahme (4) oder auf einem auf dem Boden (6) der Aufnahme (4) stehenden Podest (20) vorgesehen ist.

4. Anordnung nach einem der vorangehenden Ansprüche, wobei mindestens eines der in der Aufnahme (4) untergebrachten Wandelemente (2) als ein schwenkbares Wandelement (14) ausgebildet ist, wobei das mindestens eine schwenkbare Wandelement (14) mittels mindestens eines Scharniers (42) an einer Stirnseite (4S) der Aufnahme (4) angelenkt und um eine vertikale Achse (V) schwenkbar ausgebildet ist.

5. Anordnung nach einem der Ansprüche 3 bis 4, wobei bei geöffnetem Schließmechanismus (10) die ausziehbaren Wandelemente (11) entgegengesetzt und parallel zu den Seitenwänden (5) der Aufnahme (4) in Längsrichtung ausziehbar und im ausgezogenen Zustand an der Aufnahme (4) festlegbar sind.

6. Anordnung nach einem der Ansprüche 2 bis 5, wobei bei geöffnetem Schließmechanismus (10) die herausnehmbaren Wandelemente (12) parallel zu den Seitenwänden (5) der Aufnahme (4) aus der Aufnahme (4) entnehmbar und jeweils ein Wandelement (2) in jeweils einem aus der Aufnahme (4) entnehmbaren Podest (20) halterbar ist.

7. Anordnung nach einem der Ansprüche 3 bis 6, wobei die herausnehmbaren Wandelemente (12) an einer Außenfläche (5A) der Seitenwände (5) der Aufnahme (4) mechanisch und/oder magnetisch halterbar sind.

8. Anordnung nach einem der vorangehenden Ansprüche, wobei mindestens eine Oberfläche (2F) der Wandelemente (2) eine Beschichtung (30) trägt, die beschreibbar und abwischbar ist.

9. Anordnung nach einem der Ansprüche 2 bis 8, wobei eine Außenfläche (5A) der mindestens einen Seitenwand (5) der Aufnahme (4) eine Beschichtung (30) trägt, die beschreibbar und abwischbar ist.

10. Anordnung nach einem der vorangehenden Ansprüche, wobei eine weiche Matte (32) an mindestens einer Oberfläche (2F) des mindestens einen Wandelements (2) und/oder an mindestens einer Außenfläche (5A) der mindestens einen Seitenwand (5) der Aufnahme (4) mittels mechanischer und/oder magnetischer Haltemittel (24) montierbar ist.

11. Anordnung nach Anspruch 10, wobei in der Aufnahme (4) mindestens ein Fach (13) vorgesehen ist, in dem die weichen Matten (32) aufbewahrbar sind.

12. Anordnung nach einem der vorangehenden Ansprüche, wobei am Boden (6) der Aufnahme (4) mehrere Transportrollen (8) angeordnet sind.

13. Verwendung der Anordnung nach einem der vorangehenden Ansprüche zur Abgrenzung mindestens eines Teilraums (102) in einem Raum (100).

## Claims

1. Arrangement comprising at least one wall element (2) and a device (1) for storing and using the at least one wall element (2),
wherein the device (1) comprises a receptacle (4) for the at least one wall element (2), wherein the receptacle (4) comprises at least one structural element (200) connecting a floor (6) and a ceiling (7) of the receptacle (4),
**characterized by**
an opening (40) formed in each of the wall elements (2);
an opening (48) formed in the at least one structural element (200); and
a locking mechanism (10) of the device (1) that engages through the opening (48) of the at least one structural element (200) and through each of the openings (40) of the wall elements (2), whereby the wall elements (2) are secured in the receptacle (4) of the device (1) against unauthorized removal.

2. Arrangement according to claim 1, wherein the at least one structural element (200) is at least one side wall (5) or at least one column (50), a continuous wall (50) or a partially continuous wall (50) connecting and supporting the floor (6) and the ceiling (7).

3. Arrangement according to one of the preceding claims, wherein the wall elements (2) accommodated in the receptacle (4) are designed as extendable wall elements (11) which are held at at least one upper end (11O) and/or one lower end (11U) via at least one extension (15) extending in a longitudinal direction (L) of the receptacle (4), and/or which are designed as removable wall elements (12) which are guided at an upper end (120) in a suspended manner on a linear guide (16) extending in a longitudinal direction (L) of the receptacle (4), or the wall elements (12) which are guided in a suspended manner and are removable are guided at a lower end (12U) of the wall elements (12) in a lateral guide (18), or the removable wall elements (12) are guided at a lower end (12U) upright in a lateral guide (18) in the longitudinal direction (L) of the receptacle (4) and at an upper end (120) freely in a guide element (19) on the ceiling (7) of the receptacle (4), wherein the lateral guide (18) for the lower end (12U) of the removable wall element (12) is provided directly on the floor (6) of the receptacle (4), on a support plate (45) above the floor (6) of the receptacle (4) or on a pedestal (20) standing on the floor (6) of the receptacle (4).

4. Arrangement according to one of the preceding claims, wherein at least one of the wall elements (2) accommodated in the receptacle (4) is designed as a pivotable wall element (14), wherein the at least one pivotable wall element (14) is articulated by means of at least one hinge (42) to an end face (4S) of the receptacle (4) and is designed to be pivotable about a vertical axis (V).

5. Arrangement according to one of claims 3 to 4, wherein, when the locking mechanism (10) is open, the extendable wall elements (11) can be extended longitudinally in the opposite direction and parallel to the side walls (5) of the receptacle (4) and can be fixed to the receptacle (4) in the extended state.

6. Arrangement according to one of claims 2 to 5, wherein, when the locking mechanism (10) is open, the removable wall elements (12) can be removed from the receptacle (4) parallel to the side walls (5) of the receptacle (4) and one wall element (2) in each case can be held in a pedestal (20) which can be removed from the receptacle (4).

7. Arrangement according to one of claims 3 to 6, wherein the removable wall elements (12) are mechanically and/or magnetically retainable on an outer surface (5A) of the side walls (5) of the receptacle (4).

8. Arrangement according to one of the preceding claims, wherein at least one surface (2F) of the wall elements (2) carries a coating (30) that is writable and wipeable.

9. Arrangement according to one of claims 2 to 8, wherein an outer surface (5A) of the at least one side wall (5) of the receptacle (4) carries a coating (30) that is writable and wipeable.

10. Arrangement according to one of the preceding claims, wherein a soft mat (32) is mountable on at least one surface (2F) of the at least one wall element (2) and/or on at least one outer surface (5A) of the at least one side wall (5) of the receptacle (4) by means of mechanical and/or magnetic holding means (24).

11. Arrangement according to claim 10, wherein at least one compartment (13) is provided in the receptacle (4) in which the soft mats (32) can be stored.

12. Arrangement according to one of the preceding claims, wherein a plurality of transport rollers (8) are arranged at the floor (6) of the receptacle (4).

13. Use of the arrangement according to one of the preceding claims for delimiting at least one subspace (102) in a room (100).

## Revendications

1. Agencement comprenant au moins un élément de paroi (2) et un dispositif (1) de stockage et d'utilisation de l'au moins un élément de paroi (2),
le dispositif (1) comprenant un logement (4) pour l'au moins un élément de paroi (2), le logement (4) comprenant au moins un élément de construction (200) qui relie un fond (6) et un plafond (7) du logement (4),
**caractérisé par**
une ouverture (40) formée dans chacun des éléments de paroi (2) ;
une ouverture (48) formée dans l'au moins un élément de construction (200) ; et
un mécanisme de fermeture (10) du dispositif (1) qui s'engage à travers l'ouverture (48) de l'au moins un élément de construction (200) et à travers chacune des ouvertures (40) des éléments de paroi (2), protégeant ainsi les éléments de paroi (2) dans le logement (4) du dispositif (1) contre un retrait non autorisé.

2. Agencement selon la revendication 1, dans lequel l'au moins un élément de construction (200) est au moins une paroi latérale (5) ou au moins une colonne (50), une paroi continue (50) ou une paroi partiellement continue (50) qui relie et maintient le fond (6) et le plafond (7).

3. Agencement selon l'une quelconque des revendications précédentes, dans lequel les éléments de paroi (2) logés dans le logement (4) sont réalisés sous forme d'éléments de paroi extensibles (11), qui sont maintenus à au moins une extrémité supérieure (11O) et/ou une extrémité inférieure (11U) par l'intermédiaire d'au moins une extension (15) s'étendant dans une direction longitudinale (L) du logement (4), et/ou qui sont réalisés sous forme d'éléments de paroi amovibles (12), qui sont guidés à une extrémité supérieure (120) en étant suspendus à un guidage linéaire (16) s'étendant dans une direction longitudinale (L) du logement (4), ou les éléments de paroi amovibles (12) qui sont guidés en étant suspendus à une extrémité inférieure (12U) des éléments de paroi (12) dans un guidage latéral (18), ou les éléments de paroi amovibles (12) sont guidés à une extrémité inférieure (12U) debout dans un guidage latéral (18) dans la direction longitudinale (L) du logement (4) et à une extrémité supérieure (120) librement dans un élément de guidage (19) sur le plafond (7) du logement (4), le guidage latéral (18) pour l'extrémité inférieure (12U) de l'élément de paroi amovible (12) étant prévu directement sur le fond (6) du logement (4), sur une plaque de support (45) au-dessus du fond (6) du logement (4) ou sur un socle (20) reposant sur le fond (6) du logement (4).

4. Agencement selon l'une quelconque des revendications précédentes, dans lequel au moins un des éléments de paroi (2) logés dans le logement (4) est réalisé sous la forme d'un élément de paroi pivotant (14), l'au moins un élément de paroi pivotant (14) étant réalisé articulé sur une face frontale (4S) du logement (4) au moyen d'au moins une charnière (42) et pivotant autour d'un axe vertical (V).

5. Agencement selon l'une quelconque des revendications 3 à 4, dans lequel, lorsque le mécanisme de fermeture (10) est ouvert, les éléments de paroi extensibles (11) sont extensibles dans la direction longitudinale en sens inverse et parallèlement aux parois latérales (5) du logement (4) et peuvent être fixés au logement (4) à l'état étendu.

6. Agencement selon l'une quelconque des revendications 2 à 5, dans lequel, lorsque le mécanisme de fermeture (10) est ouvert, les éléments de paroi amovibles (12) peuvent être retirés du logement (4) parallèlement aux parois latérales (5) du logement (4) et un élément de paroi (2) dans chaque cas peut être maintenu dans un socle (20) qui peut être retiré du logement (4).

7. Agencement selon l'une quelconque des revendications 3 à 6, dans lequel les éléments de paroi amovibles (12) peuvent être maintenus mécaniquement et/ou magnétiquement sur une surface extérieure (5A) des parois latérales (5) du logement (4).

8. Agencement selon l'une quelconque des revendications précédentes, dans lequel au moins une surface (2F) des éléments de paroi (2) porte un revêtement (30) sur lequel il est possible d'écrire et d'essuyer.

9. Agencement selon l'une quelconque des revendications 2 à 8, dans lequel une surface extérieure (5A) de l'au moins une paroi latérale (5) du logement (4) porte un revêtement (30) sur lequel il est possible d'écrire et d'essuyer.

10. Agencement selon l'une quelconque des revendications précédentes, dans lequel un tapis souple (32) peut être monté sur au moins une surface (2F) de l'au moins un élément de paroi (2) et/ou sur au moins une surface extérieure (5A) de l'au moins une paroi latérale (5) du logement (4) à l'aide de moyens de retenue mécaniques et/ou magnétiques (24).

11. Agencement selon la revendication 10, dans lequel il est prévu dans le logement (4) au moins un compartiment (13) dans lequel les tapis souples (32) peuvent être rangés.

12. Agencement selon l'une quelconque des revendications précédentes, dans lequel plusieurs rouleaux de transport (8) sont disposés sur le fond (6) du logement (4).

13. Utilisation de l'agencement selon l'une quelconque des revendications précédentes pour délimiter au moins un sous-espace (102) dans une pièce (100).
